# EUROPEAN PATENT SPECIFICATION

(11) **EP 0 655 316 B1**
(45) Date of publication and mention of the grant of the patent: **02.02.2000**
(21) Application number: 94308711.4
(22) Date of filing: 25.11.1994
(51) Int. Cl.: B29C 59/04, B29C 55/06, B41M 3/10

(54) **Watermarks on synthetic paper**
Synthetisches Papier mit Wasserzeichen
Papier synthétique filigrane

(30) Priority: 26.11.1993 GB 9324337; 17.12.1993 GB 9325861
(43) Date of publication of application: 31.05.1995
(73) Proprietor: ARJOBEX LIMITED, HEMEL HEMPSTEAD, Herts HP2 4UL (GB)
(72) Inventor: Leese, Leonard, Manningtree, Essex CO11 1QG (GB)
(74) Representative: Krishnan, Suryanarayana Kalyana

(56) References cited:
- EP-A- 0 374 930
- EP-A- 0 470 760
- US-A- 3 664 780
- DATABASE WPI Section Ch, Week 8246 Derwent Publications Ltd., London, GB; Class A32, AN 82-98986E & JP-B-57 049 373 ( OJI YUKA GOSEISHI KK) , 21 October 1982

## Description

This invention relates to a method of placing a watermark on eg documents, securities or currency made from synthetic paper which mark is visible under transmitted light.

It is well known to introduce water marks on paper. The application of watermarks has hitherto been done in a variety of ways. One such method is to form the watermarks during the manufacture of the paper by means of round moulds bearing impressions which are hollow and/or in relief, with the aid of watermarking rollers bearing designs which are hollow and/or in relief, associated with a flat table (Fourdrinier machine). This method then makes it possible to obtain an image which, when the sheet of paper is viewed in transmitted light, appears either as a light impression (when using a roller with a relief design) or as a dark impression (when using a roller with a hollow design). The clear areas are due to the fact that the thickness of the sheet and the density of the fibres are less than the thickness of the sheet and the corresponding areas where the roller has not left an impression.

A further method is to create pseudo-watermarks by printing or depositing a compound, generally greasy, which renders the sheet of paper permanently transparent. The transparent effect can equally well be created by means of a heat-fusible material such as polyethylene as described in EP-A-203499. In the latter reference, the pseudo-watermark is applied to a sheet of paper which comprises a thermally sensitive material, and heat is applied to a part of the surface of the paper in a manner to cause a region of the paper to become irreversibly translucent.

Yet another method of creating a watermark on a sheet of paper is to control the opacity of pre-defined areas of the paper using an opacifier. FR-A-2353676 describes such a process. The opacifier may be an aqueous suspension of a pigment or other chemical compound which in turn may be a coloured compound or an ink. The opacifier is applied during the manufacture of the sheet, on the fibrous nap and before it is raised from the backcloth, in such a manner that said opacifier penetrates into the interstices of the nap at pre-defined areas, thereby changing the opacity thereof upon drying. This technique has the disadvantage that it requires special roller arrangements to apply the opacifier and equipment to enable the opacifier to penetrate the nap interstices.

Again US-A-4520063 describes a sheet made of synthetic resin containing security markings which are similar to watermarks. Two cross-linkable colourants, which have different rates of migration into the surface of a sheet in the presence of a cross-linking agent, are applied on the sheet. Subsequent cross-linking of the colourant when the desired migration depth has been reached, by the colourant penetrating at least a part of the thickness of the sheet to correspond to the selected security feature eg pattern or motif, shows the security feature in congruant fashion on both sides of the sheet. In reflected light, a motif can be seen which bears the colour of this colourant on the surface of the sheet, and in transmitted light a motif of mixed colour can be seen. This process is difficult to apply on a plastic sheet since it requires careful choice of unobvious colourants and cross-linking agents.

A further process is described in EP-A-500726 which describes a process for producing a printable flexible sheet. This sheet incorporates at least one substrate sheet of synthetic material having at least one surface treated with a compound to modify its opacity at pre-determined points in such a way that when viewed by transmitted light, a distinctive security mark can be seen. This compound is then covered by a printable pigmented layer.

As can be seen, most of the above processes are rather complex and involve the use of a numerous additonal compounds, colourants, cross-linking agents and/or a plurality of layers. Synthetic papers based on fibrous materials are intrinsically capable of being given a watermark in the same way as cellulosic papers, so that the mark becomes an essential feature of the sheet which is difficult to reproduce.

For synthetic paper based on film, hitherto the methods used have been applied to the synthetic paper film directly or to a film which is converted to a synthetic paper by coating, as described above. The watermark, as applied in such cases, has essentially its final dimensions and form.

It has now been found that where manufacture of synthetic paper includes a stretching and/or orientation stage(s), suitable modifications of the ingoing sheet prior to orientation by the use of heated rollers or by pressure can produce variations of opacity in the finished sheet which gives the effect of a "watermark" in conventional paper.

Accordingly, the present invention is a process for creating a watermark on a sheet of polymeric material, said process comprising
a. passing the sheet between two rollers in abutment with each other and wherein at least one of the rollers bears motifs which are hollow and/or in relief so as to form an impression on the passing sheet which impression corresponds to the hollow and/or in relief motifs on said roller(s), and
b. orienting by stretching the sheet so impressioned such that when viewed in a transmitted light, the oriented sheet exhibits an impression of the motif which is dark in areas corresponding to the in relief portions and light in areas corresponding to the hollow portions of the motifs on said roller(s).

In the process of the present invention, the sheet of polymeric material to be stretched and/or oriented is suitably a film or sheet comprising at least one polyolefin, preferably polyethylene or polypropylene. More preferably, the sheet suitably comprises polyethylene as one of the essential components and is suitably formed by extrusion or callendering. The sheet, after stretching and/or orientation is suitably capable of receiving printing thereon and may have been subjected to prior chemical or corona discharge treatment on the surface thereof to improve its receptivity to print or other coating that may be applied thereon. Sheets particularly suitable for this purpose are suitably those produced eg by extrusion of compositions conventionally used for producing polyolefin synthetic papers consisting primarily of polyethylene, ie POLYART® 1 (uncoated) and POLYART®2 (coated)(ex Arjobex Ltd), and co-extruded sheets of the type described in our published EP-A-0470760. The watermark is suitably applied to the film before applying the coating thereon.

The compositions which may be extruded into sheets are suitably of the type claimed and described in our published GB-A-1470372, GB-A-1490512, GB-A-1487171 and EP-A-0470760 and are incorporated herein by reference to the relevant specifications. A typical composition is one which contains for instance one or more of the following:

| Component | Parts by weight |
|---|---|
| High density polyethylene (copolymer) | 100 |
| Calcium-zinc resinate | 5-15 |
| Polystyrene | 4.5-5.5 |
| High density polyethylene (homopolymer) | 17.5-21 |
| Calcium carbonate filler | 15-25 |
| Titanium dioxide | 5-10 |
| Styrene-butadiene copolymer | 0-1.0 |
| Calcium oxide | 0.4-1.0 |

Such compositions can be extruded to form a sheet which is held under tension when passing through conventional rollers and guide rails *en route* to the orienting/stretching stage whereby the thickness of the sheet is reduced to a significant extent. These stages are conventional and can be *inter alia* a process as claimed and described in our published GB-A-1442113. The feature of the present invention is that prior to entering the orienting/stretching stage, the sheet is passed through two rollers in abutment with each other and at least one of these two rollers bears on the surface thereof motif(s) which are hollows and/or in reliefs. When the sheet is passed in between these two rollers, an impression of the motif defined by the hollows and/or in reliefs is transferred to the sheet passing therethrough. The sheet so impressioned and emerging from these rollers is then subjected to the conventional orienting (stretching) stages.

The hollows and/or in reliefs forming the motif(s) are suitably present on the surface of only one of the rollers. This roller is suitably of a smaller diameter than the other roller in abutment therewith and between which the sheet is passed through. The rollers may be hot or cold and would depend upon the speed of response desired to create an impression on the sheet. The temperature of the roller may thus vary in the range from ambient to a temperature about 5°C above the machine temperature.

In its simplest form, the motif on the roller can take the form of a series of regular lines parallel to the machine direction on a reel of the sheet. The continual rotation of the roller bearing the motif would impart a repeat pattern in the machine direction as is desired. Such a pattern may consist of a linear design giving a distribution of lines across the web of any desired degree of complexity.

Alternatively, individual motifs may be spaced in a pattern round the circumference of the roll so as to give a repeating pattern along the machine direction. Such patterns may be abstract or figurative in character and can be reproduced in an enlarged form on the finished film based on synthetic paper.

It will be clear that the pattern on the finished sheet retains the form of the impressed pattern but is enlarged according to the stretch ratios applied in the transverse and machine directions. A simple analysis of the stretching process shows that more complex patterns can be reproduced in the same way and the design of suitable rollers for any desired pattern can be determined provided that the stretching of the sheet is uniform. In the case where it is desirable to have non-uniform stretching, analysis of the weight distribution of film in the stretched web will enable the impression of the pattern on the ingoing sheet to be intentionally distorted in the appropriate manner so that the finished sheet, after orientation, has the desired motif or pattern.

After the impression has been formed on the sheet, said sheet is subjected to a conventional orientation (stretching) step as described previously. Such orientation may be in the machine direction or in the transverse direction but will normally be biaxial in both directions, suitably in a stretch ratio from 2:1 to 10:1, preferably from 3:1 to 6:1 in the machine direction and from 3:1 to 6:1 in the transverse direction. Such biaxial orientation may be carried out sequentially or simultaneously by methods known in the art such as that described in our published GB-A-1374574,GB-A-1442113 or GB-A-1490512. The oriented sheet, when viewed in transmitted light, exhibits an impression of the motif which is dark in areas corresponding to but not necessasrily identical with the in relief portions and light in areas corresponding to but not necessarily identical with the hollow portions of the motifs on said rollers. The impressions of the motifs formed on the oriented sheet are suitably such that they are not visible, or are only slightly visible, in reflected light but are wholly visible in transmitted light.

After orientation, a coating may be applied on the impressioned sheet while ensuring that the impression remains visible. The coating is suitably that of a pigmented compound which is capable of being printed upon. Such a compound may be a coloured and/or fluorescent compound and is suitably capable of being applied in an aqueous medium. Where a pigmented compound is used, this suitably comprises a mineral such as eg titanium dioxide. The present invention is not limited by the type of pigmented compound that can be used. Such a coating may contain other conventional ingredients such as bonding agents, dispersing agents etc.

The method of the present invention can be applied to any sheet or paper type material made from polymers which are used for producing either bank notes or other documents needing a degree of security, especially documents such as eg deeds, identity cards, passports, engineering drawings and bank cards. For instance, a typical composition (A)comprising the following components was processed:

| Component | Parts by weight |
|---|---|
| Rigidex® 002/55 HD polyethylene copolymer (ex BP Chem Ltd) | 100 |
| Rigidex® HD607OEA HD polyethylene (ex BP Chemicals Ltd) | 17.6 |
| Polystyrene Grade HF888 (ex BP Chemicals Ltd) | 4.8 |
| Ennesin® ZC14 (Ca-Zn resinate, ex Leon Frenkel Ltd) | 9.6 |
| Cariflex®TR1102 (Styrene-butadiene copolymer, ex Shell UK) | 0.6 |
| Anhyd. CaCO₃ 2.5µ particle size | 21.0 |
| TiO₂ (Rutile) | 5.8 |
| Armostat®400 (antistat, ex AKZO Chem Ltd) | 0.14 |
| Armostat®375D (antistat, ex AKZO Chem Ltd) | 0.35 |
| Caloxal®CPA (CaO, ex Sturge Lifford Ltd) | 0.58 |
| Calcium stearate (ex RTZ Chem Ltd) | 0.04 |
| Irganox®B215 (antiox., ex Ciba Geigy Ind Ltd) | 0.29 |

Within the above compositon, the following components were initially separately, melt blended, cooled and diced into masterbatches A1 and A2:

| A1 | | A2 | |
|---|---|---|---|
| CaCO₃ | 60% | TiO₂ | 60% |
| Rigidex®HD 6070EA | 39.6% | Rigidex®HD 6070EA | 39.6% |
| Armostat®400 | 0.4% | Calcium stearate | 0.4% |

Masterbatches A1 and A2 were then intermixed in appropriate proportions with the remainder of the ingredients of the composition(A) and fed into a compounding extruder. The resulting composition was extruded into a sheet which was then passed through the rollers.

The present invention is further described specifically with reference to the following drawings:

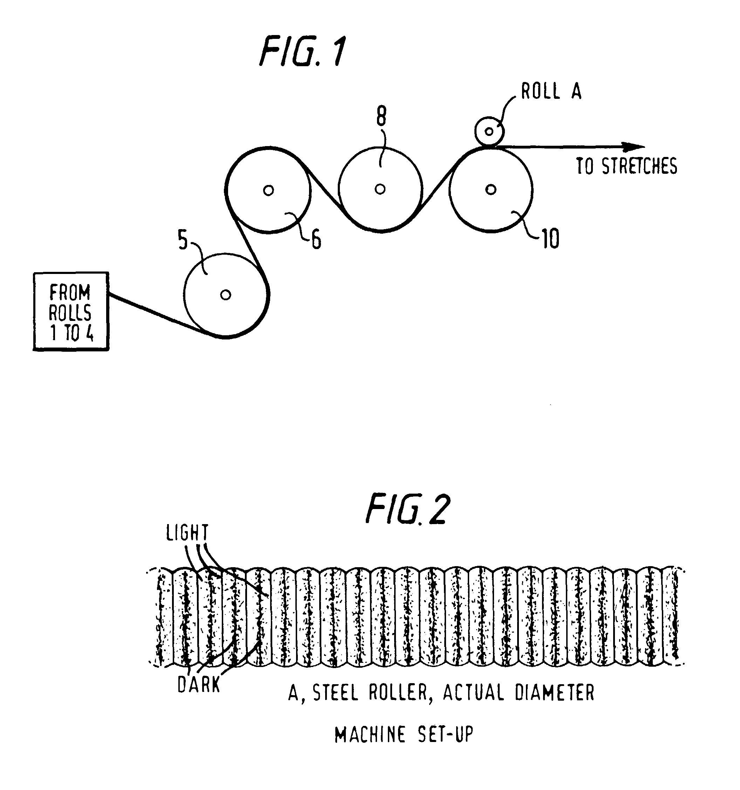

In the drawings Figure 1 represents the path of a sheet of polymeric material extruded as above and Figure 2 represents the impression produced on the sheet which can correspond to a water mark.

With reference to the drawings, a sheet of polymeric material (1) extruded as above is drawn from a reel (4) is passed around guide rollers 5, 6 and 8 under tension. The sheet is then passed between steel rollers A and 10, roller A carrying the desired motif (which corresponded to that shown in Figure 2) which in this case is a set of dark and light zones which are parallel to the machine direction. When the sheet emerges from between the rollers A and 10, it carries the impression of the motifs thereon as shown in Figure 2. This impressioned sheet is then subjected to a conventional stretching and orienting step (not shown).

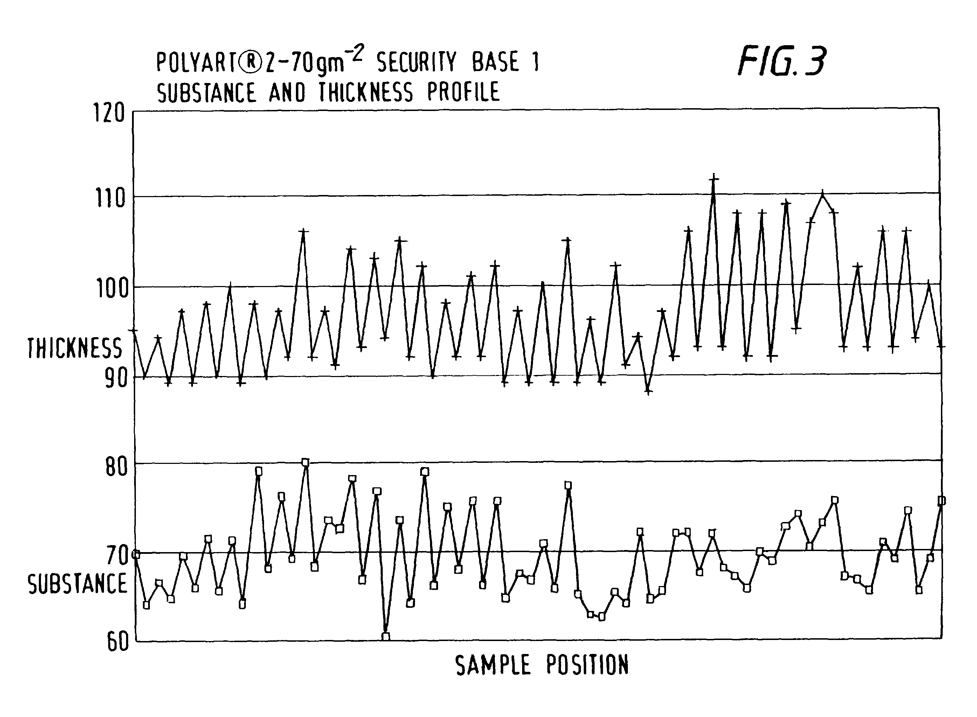

In use, the dark and light zones on roller A had dimensions of 20 x 0.5 cms and 10 x 1.0 cms respectively. A oriented sheets (70g/m²) was cut into strips marked dark and light and the amount of substance, thickness and density of each strip determined and the results are plotted in Figure 3. The determination was repeated for bands 1-24 to eliminate any anomalous results and then averaged out. The results as averaged are shown in the Table 1 and 2 below.

From these results it is clear that the change in opacity is essentially the result of an increase in substance, due to cooling.

**TABLE 1**

| ORIENTED SHEET (70g/m²) SECURITY BASE 1 | | | |
|---|---|---|---|
| Dark Strips | | | |
| Sample Position | Thickness (t,µ) | Substance (s g/m²) | Density (g/m³) |
| 1 | 95 | 69.6 | 0.733 |
| 2 | 94 | 66.4 | 0.706 |
| 3 | 97 | 69.5 | 0.716 |
| 4 | 98 | 71.5 | 0.730 |
| 5 | 100 | 71.2 | 0.712 |
| 6 | 98 | 79.1 | 0.809 |
| 7 | 97 | 76 | 0.784 |
| 8 | 106 | 80 | 0.755 |
| 9 | 97 | 73.5 | 0.758 |
| 10 | 104 | 78.1 | 0.751 |
| 11 | 103 | 76.8 | 0.746 |
| 12 | 105 | 77.5 | 0.7 |
| 13 | 102 | 78.9 | 0.774 |
| 14 | 98 | 74.9 | 0.764 |
| 15 | 101 | 75.6 | 0.749 |
| 16 | 102 | 75.7 | 0.742 |
| 17 | 97 | 67.4 | 0.695 |
| 18 | 100 | 70.7 | 0.707 |
| 19 | 105 | 77.3 | 0.736 |
| 20 | 96 | 62.7 | 0.633 |
| 21 | 102 | 65.2 | 0.639 |
| 22 | 94 | 72.2 | 0.768 |
| 23 | 97 | 65.3 | 0.673 |
| 24 | 106 | 72 | 0.679 |
| Mean | 100 | 72.5 | 0.728 |
| Standard Deviation | 4 | 4.7 | 0.041 |

| Light Strips | | | |
|---|---|---|---|
| Sample Position | Thickness (t,µ) | Substance (s g/m²) | Density (g/m³) |
| 1 | 90 | 64 | 0.711 |
| 2 | 89 | 64.5 | 0.725 |
| 3 | 89 | 65.8 | 0.739 |
| 4 | 90 | 65.3 | 0.726 |
| 5 | 89 | 64.1 | 0.720 |
| 6 | 90 | 68 | 0.756 |
| 7 | 92 | 69.1 | 0.751 |
| 8 | 92 | 68.3 | 0.742 |
| 9 | 91 | 72.5 | 0.797 |
| 10 | 93 | 66.7 | 0.717 |
| 11 | 94 | 60.2 | 0.64 |
| 12 | 92 | 64.1 | 0.697 |
| 13 | 90 | 66.1 | 0.734 |
| 14 | 92 | 67.9 | 0.738 |
| 15 | 92 | 66.1 | 0.718 |
| 16 | 89 | 64.6 | 0.726 |
| 17 | 89 | 66.5 | 0.747 |
| 18 | 89 | 65.5 | 0.736 |
| 19 | 89 | 65.1 | 0.731 |
| 20 | 89 | 62.3 | 0.7 |
| 21 | 91 | 64 | 0.703 |
| 22 | 88 | 64.3 | 0.731 |
| 23 | 92 | 71.9 | 0.782 |
| 24 | 93 | 67.4 | 0.725 |
| Mean | 91 | 66.0 | 0.729 |
| Standard Deviation | 2 | 2.7 | 0.029 |

**TABLE 2**

| BARS 1-24, MEANS | | | | | | |
|---|---|---|---|---|---|---|
| Strips | s, g/m² | Δs | t, µ | Δt | d, g/m² | Δd |
| Dark | 73 | 4.7 | 100 | 3.7 | 0.728 | 0.41 |
| Light | 66 | 2.7 | 91 | 1.6 | 0.729 | 0.029 |

The above results show that there is approximately a 10% increase in substance in the dark areas of the strip.

## Claims

1. A process for creating a watermark on a sheet of polymeric material, said process comprising
a. passing the sheet between two rollers in abutment with each other and wherein at least one of the rollers bears motifs which are hollow and/or in relief so as to form an impression on the passing sheet which impression corresponds to the hollow and/or in relief motifs on said roller(s), and
b. orienting by stretching the sheet so impressioned such that when viewed in a transmitted light, the oriented sheet exhibits an impression of the motif which is dark in areas corresponding to the in relief portions and light in areas corresponding to the hollow portions of the motifs on said roller(s).

2. A process according to Claim 1 wherein the sheet of polymeric material to be stretched and/or oriented is a film.

3. A process according to Claim 1 or 2 wherein the sheet comprises at least one polyolefin.

4. A process according to any one of the preceding Claims wherein the polymeric film or sheet is formed by extrusion or callendering.

5. A process according to any one of the preceding Claims wherein the sheets are produced by extrusion of compositions consisting primarily of polyethylene and used for producing polyolefin based synthetic papers.

6. A process according to any one of the preceding Claims wherein the composition which is extruded into sheets comprises the following components:
| Component | Parts by weight |
|---|---|
| High density polyethylene (copolymer) | 100 |
| Calcium-zinc resinate | 5-15 |
| Polystyrene | 4.5-5.5 |
| High density polyethylene (homopolymer) | 17.5-21 |
| Calcium carbonate filler | 15-25 |
| Titanium dioxide | 5-10 |
| Styrene-butadiene copolymer | 0-1.0 |
| Calcium oxide | 0.4-1.0 |

7. A process according to any one of the preceding Claims wherein the sheet, after stretching and/or orientation is subjected to prior chemical or corona discharge treatment on the surface thereof to improve its receptivity to print or other coating that may be applied thereon.

8. A process according to any one of the preceding Claims wherein, after orientation, a coating is applied on the impressioned sheet while ensuring that the impression remains visible.

9. A process according to any one of the preceding Claims wherein the coating is that of a pigmented compound which may be a coloured and/or fluorescent compound and which compound is capable of being printed upon.

10. A process according to any one of the preceding Claims wherein the watermark is applied to the sheet before applying the coating thereon.

11. A process according to any one of the preceding Claims wherein the hollows and/or in reliefs forming the motif(s) are present on the surface of only one of the rollers which is of a smaller diameter than the other roller in abutment therewith.

12. A process according to any one of the preceding Claims wherein the temperature of the rollers varies in the range from ambient to a temperature about 5°C above the machine temperature.

13. A process according to any one of the preceding Claims wherein the orientation of the sheet is carried out by stretching said sheet in the machine direction, in the transverse direction or biaxial in both directions.

14. A process according to any one of the preceding Claims wherein the orientation of the sheet is by biaxial stretching in a stretch ratio from 2:1 to 10:1 in the machine direction and from 3:1 to 6:1 in the transverse direction.

15. A process according to any one of the preceding Claims 11 or 12 wherein the biaxial stretching is carried out sequentially or simultaneously.

## Patentansprüche

1. Verfahren zur Erzeugung eines Wasserzeichens auf einem Blatt aus Polymermaterial, wobei das Verfahren umfaßt
a. Durchleiten des Blatts zwischen zwei aneinander stoßenden Walzen, wobei mindestens eine der Walzen Motive trägt, die hohl und/oder erhaben sind, so daß sie nach Durchleiten des Blatts eine Prägung erzeugen, wobei die Prägung den hohlen und/oder erhabenen Motiven auf der/den Walze(n) entspricht, und
b. Orientieren des so geprägten Blatts durch Verstrecken, so daß das orientierte Blatt, wenn es in durchscheinendem Licht betrachtet wird, eine Prägung des Motivs zeigt, die in den den erhabenen Teilen entsprechenden Flächen dunkel ist und in den den hohlen Teilen entsprechenden Flächen des Motivs auf der/den Walze(n) hell ist.

2. Verfahren nach Anspruch 1, wobei das zu verstrekkende und/oder orientierende Blatt aus Polymermaterial eine Folie ist.

3. Verfahren nach Anspruch 1 oder 2, wobei das Blatt mindestens ein Polyolefin umfaßt.

4. Verfahren nach einem der vorangehenden Ansprüche, wobei die Polymerfolie oder das Polymerblatt durch Extrusion oder Kalandrieren erzeugt wird.

5. Verfahren nach einem der vorangehenden Ansprüche, wobei die Blätter durch Extrusion von hauptsächlich aus Polyethylen bestehenden Zusammensetzungen hergestellt werden und zur Herstellung von synthetischen Papieren auf Polyolefinbasis verwendet werden.

6. Verfahren nach einem der vorangehenden Ansprüche, wobei die zu Blättern extrudierte Zusammensetzung die nachstehenden Komponenten umfaßt:
| Komponente | Gewichtsteile |
|---|---|
| Hochdichtes Polyethylen (Copolymer) | 100 |
| Calcium-Zink-Resinat | 5-15 |
| Polystyrol | 4,5-5,5 |
| Hochdichtes Polyethylen (Homopolymer) | 17,5-21 |
| Calciumcarbonatfüllstoff | 15-25 |
| Titandioxid | 5-10 |
| Styrol-Butadien-Copolymer | 0-1,0 |
| Calciumoxid | 0,4-1,0 |

7. Verfahren nach einem der vorangehenden Ansprüche, wobei das Blatt nach Verstrecken und/oder Orientieren vorher chemischer Behandlung oder Behandlung durch Koronaentladung auf der Oberfläche davon unterzogen wird, um seine Aufnahmefähigkeit für Druck oder andere Beschichtung, die darauf aufgetragen werden können, zu verbessern.

8. Verfahren nach einem der vorangehenden Ansprüche, wobei nach Orientierung, eine Beschichtung auf das geprägte Blatt aufgetragen wird, wobei gewährleistet ist, daß die Prägung sichtbar bleibt.

9. Verfahren nach einem der vorangehenden Ansprüche, wobei die Beschichtung jene von einer pigmentierten Verbindung ist, die eine gefärbte und/oder fluoreszierende Verbindung sein kann und wobei die Verbindung aufgedruckt werden kann.

10. Verfahren nach einem der vorangehenden Ansprüche, wobei das Wasserzeichen auf das Blatt vor dem Auftragen der Beschichtung darauf aufgebracht wird.

11. Verfahren nach einem der vorangehenden Ansprüche, wobei das/die Motiv(e) bildenden Hohlräume und/oder Erhebungen auf der Oberfläche nur einer der Walzen vorliegt/vorliegen, die einen kleineren Durchmesser als die andere daran stoßende Walze aufweist.

12. Verfahren nach einem der vorangehenden Ansprüche, wobei die Temperatur der Walzen im Bereich von Umgebungstemperatur bis zu einer Temperatur von etwa 5°C oberhalb der Maschinentemperatur variiert.

13. Verfahren nach einem der vorangehenden Ansprüche, wobei die Orientierung des Blatts durch Verstrecken des Blatts in der Maschinenrichtung, in Querrichtung oder biaxial in beiden Richtungen ausgeführt wird.

14. Verfahren nach einem der vorangehenden Ansprüche, wobei die Orientierung des Blatts durch biaxiales Verstrecken in einem Verstreckverhältnis von 2:1 bis 10:1 in der Maschinenrichtung und von 3:1 bis 6:1 in der Querrichtung erfolgt.

15. Verfahren nach einem der vorangehenden Ansprüche 11 oder 12, wobei das biaxiale Verstrecken nacheinander oder gleichzeitig ausgeführt wird.

## Revendications

1. Procédé de fabrication d'un filigrane sur une feuille de matériau polymère, ledit procédé comprenant
a. le passage de la feuille entre deux rouleaux en butée l'un contre l'autre, caractérisé en ce que l'un au moins desdits rouleaux comprend des motifs en creux et/ou en relief de façon à former une impression sur la feuille en cours de passage, ladite impression correspondant aux motifs en creux et/ou en relief dudit ou desdits rouleau(x) et
b. l'orientation par étirage de la feuille ainsi imprimée de telle sorte que lorsqu'elle est visualisée en lumière transmise, la feuille orientée présente une impression du motif qui est sombre dans les zones correspondant aux parties en relief et claire dans les zones correspondant aux parties en creux des motifs présents sur le(s)dit(s) rouleau(x).

2. Procédé selon la revendication 1 caractérisé en ce que la feuille de matériau polymère devant être orientée et/ou étirée est un film.

3. Procédé selon l'une des revendications 1 ou 2 caractérisé en ce que la feuille comprend au moins une polyoléfine.

4. Procédé selon l'une des revendications précédentes caractérisé en ce que le film ou la feuille en polymère est formée par extrusion ou par laminage.

5. Procédé selon l'une des revendications précédentes caractérisé en ce que les feuilles sont fabriquées par extrusion de compositions constituées principalement de polyéthylène et utilisées pour fabriquer des papiers synthétiques à base de polyoléfine.

6. Procédé selon l'une des revendications précédentes caractérisé en ce que la composition qui est extrudée en feuilles comprend les composants suivants :
| Composant | Parties en poids |
|---|---|
| Polyéthylène haute densité (copolymère) | 100 |
| Résinate de calcium-zinc | 5-15 |
| Polystyrène | 4,5-5,5 |
| Polyéthylène haute densité (homopolymère) | 17,5-21 |
| Charge de carbonate de calcium | 15-25 |
| Dioxyde de titane | 5-10 |
| Copolymère styrène-butadiène | 0-1,0 |
| Oxyde de calcium | 0,4-1,0 |

7. Procédé selon l'une des revendications précédentes caractérisé en ce que la feuille, après étirage et/ou orientation, est soumise à un traitement préalable de type chimique ou par décharge lumineuse sur sa surface afin d'améliorer sa réceptivité à l'impression ou à tout autre revêtement susceptible d'être appliqué sur celle-ci.

8. Procédé selon l'une des revendications précédentes caractérisé en ce que, après orientation, un revêtement est appliqué sur la feuille imprimée tout en veillant à ce que l'impression reste visible.

9. Procédé selon l'une des revendications précédentes caractérisé en ce que le revêtement est constitué d'un composé pigmenté qui peut être un composé coloré et/ou fluorescent sur lequel il est possible d'effectuer une impression.

10. Procédé selon l'une des revendications précédentes caractérisé en ce que le filigrane est appliqué sur la feuille avant d'appliquer le revêtement sur celle-ci.

11. Procédé selon l'une des revendications précédentes caractérisé en ce que les creux et/ou reliefs formant le(s) motif(s) sont présents sur la surface d'un seul rouleau, qui est de plus petit diamètre que l'autre rouleau en butée contre celui-ci.

12. Procédé selon l'une des revendications précédentes caractérisé en ce que la température des rouleaux peut varier entre la température ambiante et une température d'environ 5°C au-dessus de la température de la machine.

13. Procédé selon l'une des revendications précédentes caractérisé en ce que l'orientation de la feuille est effectuée en étirant ladite feuille dans la direction de la machine, dans la direction transversale ou biaxialement dans les deux directions.

14. Procédé selon l'une des revendications précédentes caractérisé en ce que l'orientation de la feuille est effectuée par étirage biaxial avec un rapport d'étirage compris entre 2:1 et 10:1 dans la direction de la machine et entre 3:1 et 6:1 dans la direction transversale.

15. Procédé selon l'une des revendications précédentes caractérisé en ce que l'étirage biaxial est séquentiel ou simultané.
